# EUROPEAN PATENT SPECIFICATION

(11) **EP 2 680 423 B1**
(45) Date of publication and mention of the grant of the patent: **07.11.2018**
(21) Application number: 13714840.9
(22) Date of filing: 07.01.2013
(51) Int. Cl.: H02M 7/12, H02M 3/28, H02M 3/335

(54) **SYNCHRONOUS RECTIFICATION DEVICE AND SYNCHRONOUS RECTIFICATION POWER SUPPLY**
SYNCHRONGLEICHRICHTUNGSVORRICHTUNG UND NETZTEIL MIT SYNCHRONGLEICHRICHTUNG
DISPOSITIF À REDRESSEMENT SYNCHRONE ET ALIMENTATION ÉLECTRIQUE À REDRESSEMENT SYNCHRONE

(30) Priority: 23.05.2012 CN 201210161781
(43) Date of publication of application: 01.01.2014
(73) Proprietor: Huawei Technologies Co., Ltd., Longgang District Shenzhen, Guangdong 518129 (CN)
(72) Inventor: LIU, Xujun, Shenzen, Guangdong 518129 (CN)
(74) Representative: Thun, Clemens
(86) International application number: PCT/CN2013/070149
(87) International publication number: WO 2013/174152

(56) References cited:
- CN-A- 1 545 196
- CN-A- 1 564 443
- CN-A- 102 035 394
- CN-A- 102 710 150
- DE-A1- 4 315 906
- JP-A- H0 993 917
- US-A- 6 061 255
- US-B1- 6 882 548

## Description

### TECHNICAL FIELD

The present invention relates to the field of power generation and transformation, and in particular, to a synchronous rectification apparatus and a synchronous rectification power supply.

### BACKGROUND

With development of the power supply technology, the area occupied by a power supply apparatus is smaller and smaller, and developers are still striving to further reduce the area occupied by the power supply apparatus, reduce costs, and improve transformation efficiency. A synchronous rectifier circuit is capable of reducing power loss in a power supply circuit.

In the synchronous rectifier circuit used in an existing power supply apparatus, the input signal of a driver chip comes from a primary-side signal processed by an isolation circuit. After processing the input signal, the driver chip generates a control signal that controls turn-on and turn-off of a rectifier transistor and a free-wheeling transistor, thereby implementing rectification and keeping steady outputting of direct current. However, in the synchronous rectifier circuit, the isolation circuit set independently increases the area to be occupied, and a time sequence deviation tends to occur between the alternating current generated by a transformer and the control signal generated by the isolation circuit and the driver chip, which affects the transformation efficiency of the power supply apparatus that includes the synchronous rectifier circuit.
US 6 061 255 A discloses a forward converter circuit that includes synchronous rectifiers as the forward and freewheeling rectifying elements in the output stage. The forward converter also includes a drive circuit for the synchronous rectifiers. The drive circuit includes an auxiliary secondary winding on the power transformer.

### SUMMARY

The embodiments of the present invention provide a synchronous rectification apparatus and a synchronous rectification power supply to improve transformation efficiency of synchronous rectification and reduce the area of the synchronous rectification power supply.

To achieve the above objectives, the embodiments of the present invention employ the following technical solutions:

In one aspect, an embodiment of the present invention provides a synchronous rectification apparatus according to claim 1.

In another aspect, an embodiment of the present invention provides a synchronous rectification apparatus according to claim 4.

In another aspect, an embodiment of the present invention provides a synchronous rectification power supply, where the power supply includes a synchronous rectification apparatus disclosed herein.

With the synchronous rectification apparatus provided in the embodiments of the present invention and the power supply that uses the apparatus, a driver unit controls a rectifier transistor and a free-wheeling transistor in a rectifier unit according to a first control signal generated by a secondary-side winding of a transformer unit and a second control signal generated by mutual inductance between the driver unit and an output inductor of the filter unit, thereby using the control signal generated by the secondary side to control rectification of the secondary-side alternating current, avoiding time sequence difference between the control signal and the alternating current, improving transformation efficiency of synchronous rectification, reducing electric components required and the area occupied by the synchronous rectification power supply, and reducing costs.

### BRIEF DESCRIPTION OF DRAWINGS

To describe the technical solution in the embodiment of the present invention or in the prior art more clearly, the following briefly introduces the accompanying drawings required for describing the embodiment or the prior art. Apparently, the accompanying drawings in the following description show merely an embodiment of the present invention, and persons of ordinary skill in the art may still derive other drawings from these accompanying drawings without creative efforts.
FIG. 1 is a schematic structural diagram of a synchronous rectification apparatus according to an embodiment of the present invention;
FIG. 2 is a circuit diagram of a synchronous rectification apparatus in a first implementation scenario according to Embodiment 1 of the present invention;
FIG. 3 is a diagram of a waveform at a gate of a rectifier transistor and a free-wheeling transistor in a rectifier unit according to an embodiment of the present invention; and
FIG. 4 is a circuit diagram of a synchronous rectification apparatus in a second implementation scenario according to Embodiment 2 of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiment of the present invention without creative efforts shall fall within the protection scope of the present invention.

The following expounds the implementation modes of the embodiments of the present invention with reference to the drawings.

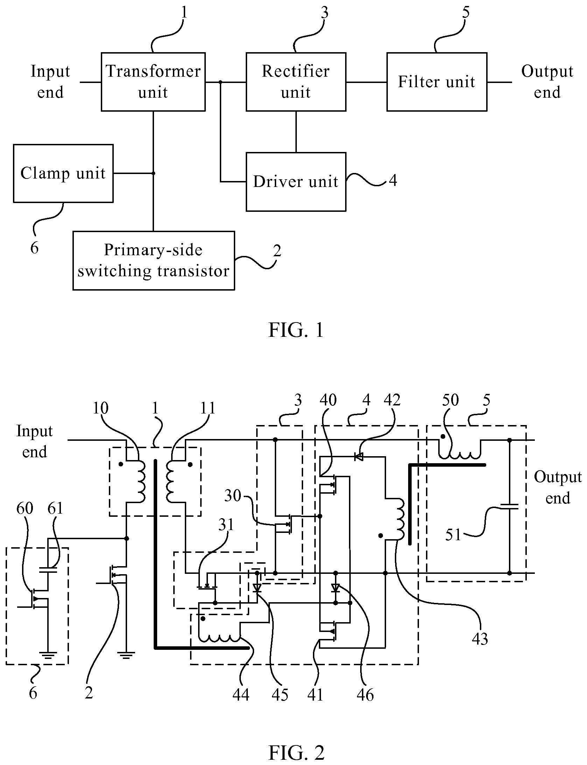

As shown in FIG. 1, an embodiment of the present invention provides a synchronous rectification apparatus, including a transformer unit 1, a primary-side switching transistor 2, a rectifier unit 3, a driver unit 4, a filter unit 5, and a clamp unit 6.

A first end of a primary-side winding of the transformer unit 1 is connected to an input end, a second end of the primary-side winding is connected to each of the primary-side switching transistor 2 and the clamp unit 6, and a secondary-side winding of the transformer unit 1 is connected to each of the rectifier unit 3 and the driver unit 4; the rectifier unit 3 is connected to each of the driver unit 4 and the filter unit 5; a first end of an output inductor in the filter unit 5 is connected to an output end; mutual inductance occurs between the output inductor and a first auxiliary winding in the driver unit 4; and a source of the primary-side switching transistor 2 is grounded.

The clamp unit 6 is configured to provide a demagnetization voltage for the primary-side winding when the primary-side switching transistor 2 is turned off.

The transformer unit 1 is configured to generate an alternating current and a first control signal at the secondary-side winding.

The rectifier unit 3 is configured to rectify the alternating current.

The filter unit 5 is configured to filter a pulsating direct current output by the rectifier unit 3 to form and output a direct current, and generate a second control signal.

The driver unit 4 is configured to drive a rectifier transistor and a free-wheeling transistor in the rectifier unit 3 to rectify an alternating current according to the first control signal and the second control signal.

A primary-side direct current is delivered from the input end to the synchronous rectification apparatus, a regular primary-side alternating current is generated between the two ends of the primary-side winding of the transformer unit 1 by performing pulse width modulation (Pulse Width Modulation, PWM for short) or pulse frequency modulation (Pulse Frequency Modulation, PFM for short) on signals that control the primary-side switching transistor 2 and the clamp unit 6, and an alternating current is generated on the secondary side through the primary-side winding and the secondary-side winding of the transformer unit 1; a first control signal for controlling the rectifier transistor and the free-wheeling transistor in the rectifier unit 3 is generated on the secondary side through the driver unit 4 according to the electric signal generated together with the alternating current; under the effect caused by the alternating current onto the output inductor in the filter unit 5, a first auxiliary winding in the driver unit 4 generates a second control signal for controlling the rectifier transistor and the free-wheeling transistor; and the rectifier transistor and the free-wheeling transistor in the rectifier unit 3 are controlled according to the first control signal and the second control signal, and therefore, the synchronous rectification apparatus completes rectification to output a direct current at the output end.

With the synchronous rectification apparatus provided in the embodiment of the present invention, a driver unit controls a rectifier transistor and a free-wheeling transistor in a rectifier unit according to a first control signal generated by a secondary-side winding of a transformer unit and a second control signal generated by mutual inductance between the driver unit and an output inductor of the filter unit, thereby using the control signal generated by the secondary side to control rectification of the secondary-side alternating current, avoiding time sequence difference between the control signal and the alternating current, improving transformation efficiency of synchronous rectification, reducing electric components required and the area occupied by the synchronous rectification power supply, and reducing costs.

### Embodiment 1

In a first implementation scenario of the present invention, the circuit diagram of the synchronous rectification apparatus may be shown in FIG. 2, where the driver unit 4 includes:
an N-channel enhancement mode field effect transistor 40 and a P-channel enhancement mode field effect transistor 41, where a source of the N-channel enhancement mode field effect transistor 40 is connected to each of a source of the P-channel enhancement mode field effect transistor 41 and a gate of the free-wheeling transistor 30;
a first diode 42, where a cathode of the first diode 42 is connected to a drain of the N-channel enhancement mode field effect transistor 40, an anode of the first diode 42 is connected to a first end of the first auxiliary winding 43, a second end of the first auxiliary winding 43 is connected to each of a drain of the P-channel enhancement mode field effect transistor 41, a source of the rectifier transistor 31, and a source of the free-wheeling transistor 30;
a second auxiliary winding 44, where a first end of the second auxiliary winding 44 is connected to a gate of the rectifier transistor 31, a second end of the second auxiliary winding 44 is connected to each of a gate of the N-channel enhancement mode field effect transistor 40 and a gate of the P-channel enhancement mode field effect transistor 41, and mutual inductance occurs between the second auxiliary winding 44 and the primary-side winding 10 of the transformer unit 1; and
a second diode 45 and a third diode 46, where a cathode of the second diode 45 and a cathode of the third diode 46 are respectively connected to the first end and the second end of the second auxiliary winding 44, and an anode of the second diode 45 and an anode of the third diode 46 are connected to each of the source of the rectifier transistor 31 and the source of the free-wheeling transistor 30.

The first end of the primary-side winding 10 and the first end of the second auxiliary winding 44 are mutual dotted terminals, and the second end of the first auxiliary winding 43 and a second end of the output inductor 50 are mutual dotted terminals.

Optionally, in the first implementation scenario of the present invention, a drain of the rectifier transistor 31 is connected to a first end of the secondary-side winding 11 of the transformer unit, and a drain of the free-wheeling transistor 30 is connected to each of a second end of the secondary-side winding 11 and the second end of the output inductor 50.

The first end of the primary-side winding 10 and the second end of the secondary-side winding 11 are mutual dotted terminals.

Optionally, the filter unit 5 further includes:
a filter capacitor 51, where the first end of the output inductor 50 and one end of the filter capacitor 51 are both connected to the output end; and the other end of the filter capacitor 51 is connected to each of the second end of the first auxiliary winding 43, the source of the free-wheeling transistor 30 and the source of the rectifier transistor 31, the anode of the second diode 45, and the anode of the third diode 46.

Optionally, in the first implementation scenario of the present invention, the clamp unit 6 includes:
a clamp diode 60 and a clamp capacitor 61, where one end of the clamp capacitor 61 is connected to each of the second end of the primary-side winding 10 and the primary-side switching transistor 2, and the other end of the clamp capacitor 61 is connected to a drain of the clamp diode 60; and a source of the clamp diode 60 is grounded.

The structure of the clamp unit 6 is also applicable to other implementation scenarios of the present invention.

By performing PWM or PFM, the on and off states of the primary-side switching transistor 2 and the clamp unit 6 are controlled, where the waveform of a signal for turning on the primary-side switching transistor 2 is opposite to the waveform of a signal for turning on the clamp diode 60 of the clamp unit 6.

When the primary-side switching transistor 2 is turned on and the clamp diode 60 of the clamp unit 6 is cut off, a input voltage of the input end is loaded onto the two ends of the primary-side winding 10 of the transformer unit 1, and, under effect of the input voltage, mutual inductance occurs between the primary-side winding 10 and the secondary-side winding 11, and an alternating current is generated on the secondary-side winding 11 on the secondary side; a first control signal is generated through mutual inductance between the primary-side winding 10 and the second auxiliary winding 44, and, in this case, the first end of the second auxiliary winding 44 is positive, and the second end is negative; under effect of the first control signal, the second diode 45 is cut off, and the third diode 46 is conducted, and, because the rectifier transistor 31 is an N-channel enhancement mode field effect transistor, the rectifier transistor 31 is conducted when the difference between the gate voltage of the rectifier transistor 31 and the source voltage of the rectifier transistor 31 is greater than an actuating voltage of the rectifier transistor 31; the gate of the P-channel enhancement mode field effect transistor 41 and the gate of the N-channel enhancement mode field effect transistor 40 are on low levels, which makes the P-channel enhancement mode field effect transistor 41 turn on and makes the N-channel enhancement mode field effect transistor 40 cut off; if the second end of the output inductor 50 in the filter unit 5 is positive and the first end is negative, the first auxiliary winding 43 of the driver unit 4 generates a second control signal, and, the second end is positive and the first end is negative, which make the gate of the free-wheeling transistor 30 be on a low level and the free-wheeling transistor 30 cut off ; the rectified direct current is loaded onto the two ends of the filter capacitor 51 in the filter unit 5, and the direct current is filtered by the filter capacitor 51 and the output inductor 50 to filter out noise in the direct current, and the filtered direct current is output to the output end.

When the primary-side switching transistor 2 is turned off and the clamp diode 60 in the clamp unit 6 is conducted, an excitation current is discharged on the primary-side winding 10 to charge the clamp capacitor 61; in the charging process, the excitation current diminishes gradually and the voltage of the clamp capacitor 61 is higher than the input voltage, and therefore, the clamp capacitor 61 discharges electricity to the primary-side winding 10, which makes the voltages at the two ends of the primary-side winding 10 reverse their directions compared with the voltages existent when the primary-side switching transistor 2 is turned on; correspondingly, the alternating currents generated on the secondary-side winding 11, the second auxiliary winding 44 and the first auxiliary winding 43, the first control signal, and the second control signal are also reversed; at this time, the first control signal generated by the second auxiliary winding 44 is negative at the first end and positive at the second end; the second diode 45 is conducted, and the third diode 46 is cut off; the gate of the rectifier transistor 31 is on a low level, which makes the rectifier transistor 31 cut off; the gate of the P-channel enhancement mode field effect transistor 41 and the gate of the N-channel enhancement mode field effect transistor 40 are on high levels, which makes the P-channel enhancement mode field effect transistor 41 be in a cut-off state and makes the N-channel enhancement mode field effect transistor 40 be in a conducted state; the second control signal generated on the first auxiliary winding 43 is positive at the second end of the first auxiliary winding 43 and negative at the first end, and the first diode 42 is conducted; the first diode 42 and the N-channel enhancement mode field effect transistor 40 that are conducted make the gate of the free-wheeling transistor 30 be on a high level, and hence make the free-wheeling transistor 30 be in a conducted state; at this time, the output inductor 50 discharges an excitation current to the output end to provide an output voltage and keep outputting the direct current.

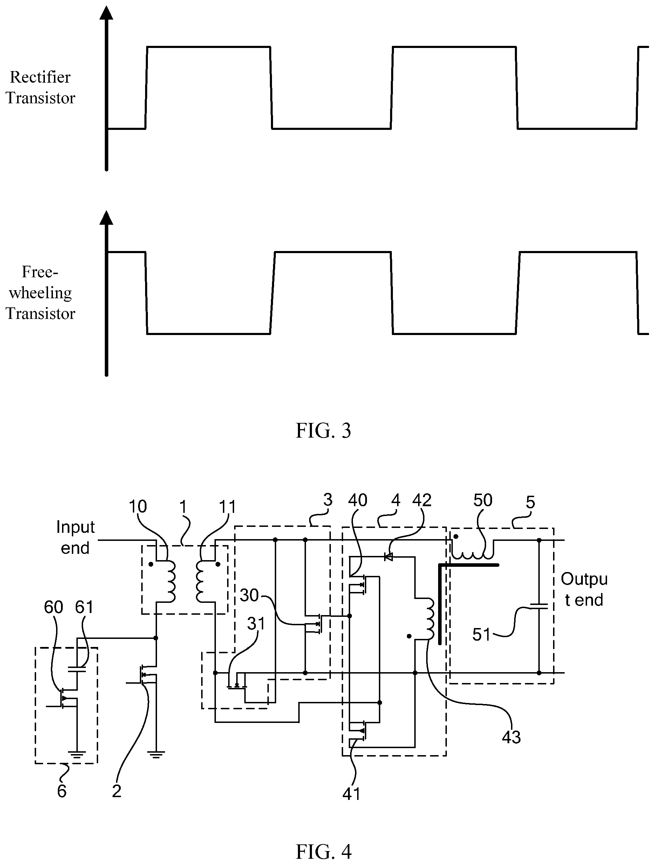

Through PWM or PFM control, the gate of the free-wheeling transistor 30 and the gate of the rectifier transistor 31 generate a waveform shown in FIG. 3; through continuous control, the output end outputs a steady output voltage, thereby providing a reliable load voltage for the load connected to the output end.

On the secondary side of the synchronous rectification apparatus, an insulated gate field effect transistor performs rectification control to reduce voltage drop and power loss, and further improve transformation efficiency of the synchronous rectification apparatus; moreover, the clamp capacitor 61 in the clamp unit 6 charges and discharges electricity, thereby providing a demagnetization voltage for the primary-side winding 10 and preventing damage caused by excessive voltage when the primary-side switching transistor 2 turns off.

### Embodiment 2

In a second implementation scenario of the present invention, the circuit diagram of the synchronous rectification apparatus may be shown in FIG. 4, where the driver unit 5 includes:
an N-channel enhancement mode field effect transistor 40 and a P-channel enhancement mode field effect transistor 41, where a source of the N-channel enhancement mode field effect transistor 40 is connected to each of a source of the P-channel enhancement mode field effect transistor 41 and a gate of the free-wheeling transistor 30, where a gate of the N-channel enhancement mode field effect transistor 40 and a gate of the P-channel enhancement mode field effect transistor 41 are connected to each of a first end of the secondary-side winding 11 and a drain of the rectifier transistor 31; and
a first diode 42, where a cathode of the first diode 42 is connected to a drain of the N-channel enhancement mode field effect transistor 40, an anode of the first diode 42 is connected to a non-dotted terminal of the first auxiliary winding 43, a second end of the first auxiliary winding 43 is connected to each of a drain of the P-channel enhancement mode field effect transistor 41, a source of the rectifier transistor 31, and a source of the free-wheeling transistor 30, where
the first end of the primary-side winding 10 and a second end of the secondary-side winding 11 are mutual dotted terminals, and the second end of the first auxiliary winding 43 and a second end of the output inductor 50 are mutual dotted terminals.

Optionally, in the second implementation scenario of the present invention, a gate of the rectifier transistor 31 and a drain of the free-wheeling transistor 30 are connected to each of the second end of the secondary-side winding 11 and the second end of the first auxiliary winding 43.

Optionally, the filter unit 5 includes:
a filter capacitor 51, where the first end of the output inductor 50 and one end of the filter capacitor 51 are both connected to the output end; and the other end of the filter capacitor 51 is connected to each of the second end of the first auxiliary winding 43, the source of the free-wheeling transistor 30, and the source of the rectifier transistor 31.

Optionally, the clamp unit 6 includes:
a clamp diode 60 and a clamp capacitor 61, where one end of the clamp capacitor 61 is connected to each of the second end of the primary-side winding 10 and the primary-side switching transistor 2, and the other end of the clamp capacitor 61 is connected to a drain of the clamp diode 60; and a source of the clamp diode 60 is grounded.

By performing PWM or PFM, the on and off states of the primary-side switching transistor 2 and the clamp unit 6 are controlled, where the waveform of a signal for controlling the primary-side switching transistor 2 is opposite to the waveform of a signal for controlling the clamp diode 60 of the clamp unit 6.

When the primary-side switching transistor 2 is turned on and the clamp diode 60 of the clamp unit 6 is turned off, the input voltage of the input end is loaded onto the two ends of the primary-side winding 10 of the transformer unit 1, and, under effect of the voltage, mutual inductance occurs between the primary-side winding 10 and the secondary-side winding 11, and an alternating current is generated on the secondary-side winding 11 on the secondary side; the second end of the secondary-side winding 11 is positive, the first end is negative, and the alternating current serves as a first control signal; the gate of the rectifier transistor 31 is on a high level, which makes the rectifier transistor 31 conduct; the gate of the P-channel enhancement mode field effect transistor 41 is on a low level, which makes the P-channel enhancement mode field effect transistor 41 conduct; if the second end of the output inductor 50 in the filter unit 5 is positive and the first end is negative, the first auxiliary winding 43 of the driver unit 4 generates a second control signal, and, the second end is positive and the first end is negative, which make the gate of the free-wheeling transistor 30 be on a low level and the free-wheeling transistor 30 cut off; the rectified direct current is loaded onto the two ends of the filter capacitor 51 in the filter unit 5, and the direct current is filtered by the filter capacitor 51 and the output inductor 50 to filter out noise in the direct current, and the filtered direct current is output to the output end.

When the primary-side switching transistor 2 is turned off and the clamp diode 60 in the clamp unit 6 is conducted, an excitation current is discharged on the primary-side winding 10 to charge the clamp capacitor 61; in the charging process, the excitation current diminishes gradually and the voltage of the clamp capacitor 61 is higher than the input voltage, and therefore, the clamp capacitor 61 discharges electricity to the primary-side winding 10, which makes the voltages at the two ends of the primary-side winding 10 reverse their directions compared with the voltages existent when the switching transistor 20 is turned on; correspondingly, the alternating currents generated on the secondary-side winding 11 and the first auxiliary winding 43 as well as the second control signal are also reversed, where the alternating currents also serve as a first control signal; the gate of the rectifier transistor 31 is on a low level, which makes the rectifier transistor 31 cut off; the gate of the P-channel enhancement mode field effect transistor 41 and the gate of the N-channel enhancement mode field effect transistor are on high levels, which makes the P-channel enhancement mode field effect transistor 41 cut off and makes the N-channel enhancement mode field effect transistor 40conduct; the second end of the output inductor 50 is negative and the first end is positive, and, under mutual inductance between the first auxiliary winding 43 and the output inductor 50, the second end of the first auxiliary winding 43 is negative and the first end is positive; the first diode 42 is conducted and the gate of the free-wheeling transistor 30 is on a high level, which makes the free-wheeling transistor 30 conduct; and at this time, the output inductor 50 discharges an excitation current to the output end to provide an output voltage and keep outputting the direct current.

Through PWM or PFM control, the gate of the free-wheeling transistor 30 and the gate of the rectifier transistor 31 generate a waveform shown in FIG. 3; through continuous control, the output end outputs a steady output voltage, thereby providing a reliable load voltage for the load connected to the output end.

With the synchronous rectification apparatus provided in the embodiment of the present invention, in a synchronous rectifier circuit, a driver unit controls a rectifier transistor and a free-wheeling transistor in a rectifier unit according to a first control signal generated by a secondary-side winding of a transformer unit and a second control signal generated by mutual inductance between the driver unit and an output inductor of the filter unit, thereby using the control signal generated by the secondary side to control rectification of the secondary-side alternating current, avoiding time sequence difference between the control signal and the alternating current, improving transformation efficiency of synchronous rectification, reducing electric components required and the area occupied by the synchronous rectification power supply, and reducing costs.

On the secondary side of the synchronous rectification apparatus, an insulated gate field effect transistor performs rectification control to reduce voltage drop and power loss, and further improve transformation efficiency of the synchronous rectification apparatus; moreover, the clamp capacitor 61 in the clamp unit 6 charges and discharges electricity, thereby providing a demagnetization voltage for the primary-side winding 10 and preventing damage caused by excessive voltage when the primary-side switching transistor 2 turns off.

Finally, an embodiment of the present invention provides a synchronous rectification power supply, where the power supply includes a synchronous rectification apparatus disclosed in the preceding embodiments. For the detailed implementations of the apparatus, refer to the preceding embodiments; and they are not described here any further. The synchronous rectification power supply that employs the apparatus can also use the control signal generated on the secondary side to control rectification of the secondary-side alternating current, thereby avoiding time sequence difference between the control signal and the alternating current, improving transformation efficiency of synchronous rectification, reducing electric components required and the area occupied by the synchronous rectification power supply, and reducing costs.

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A synchronous rectification apparatus, comprising a transformer unit (1), a primary-side switching transistor (2), a rectifier unit (3), a driver unit (4), a filter unit (5), and a clamp unit (6), wherein:
• a first end of a primary-side winding (10) of the transformer unit (1) is connected to an input end, a second end of the primary-side winding (10) is connected to each of the primary-side switching transistor (2) and the clamp unit (6), and a secondary-side winding of the transformer unit (1) is connected to each of the rectifier unit (3) and the driver unit (4); the rectifier unit (3) is connected to each of the driver unit (4) and the filter unit (5); a first end of an output inductor (50) in the filter unit (5) is connected to an output end; mutual inductance occurs between the output inductor (50) and a first auxiliary winding (43) in the driver unit (4); and a source of the primary-side switching transistor (2) is grounded;
• the transformer unit (1) is configured to generate an alternating current and a first control signal at the secondary-side winding;
• the filter unit (5) is configured to filter a pulsating direct current output by the rectifier unit (3) to form and output a direct current, and generate a second control signal; and
• the driver unit (4) is configured to drive a rectifier transistor (31) and a free-wheeling transistor (30) in the rectifier unit (3) to rectify an alternating current according to the first control signal and the second control signal,
**characterized in that**
the clamp unit (6) is configured to provide a demagnetization voltage for the primary-side winding (10) when the primary-side switching transistor (2) is turned off,
wherein the driver unit (4) comprises:
o an N-channel enhancement mode field effect transistor (40) and a P-channel enhancement mode field effect transistor (41), wherein a source of the N-channel enhancement mode field effect transistor (40) is connected to each of a source of the P-channel enhancement mode field effect transistor (41) and a gate of the free-wheeling transistor (30);
∘ a first diode (42), wherein a cathode of the first diode (42) is connected to a drain of the N-channel enhancement mode field effect transistor (40), an anode of the first diode (42) is connected to a first end of the first auxiliary winding (43), a second end of the first auxiliary winding (43) is connected to each of a drain of the P-channel enhancement mode field effect transistor (41), a source of the rectifier transistor (31), and a source of the free-wheeling transistor (30);
∘ a second auxiliary winding (44), wherein a first end of the second auxiliary winding (44) is connected to a gate of the rectifier transistor (31), a second end of the second auxiliary winding (44) is connected to each of a gate of the N-channel enhancement mode field effect transistor (40) and a gate of the P-channel enhancement mode field effect transistor (41), and mutual inductance occurs between the second auxiliary winding (44) and the primary-side winding (10) of the transformer unit (1);
∘ a second diode (45) and a third diode (46), wherein a cathode of the second diode (45) and a cathode of the third diode (46) are respectively connected to the first end and the second end of the second auxiliary winding (44), and an anode of the second diode (45) and an anode of the third diode (46) are connected to each of the source of the rectifier transistor (31) and the source of the free-wheeling transistor (30); and
∘ wherein the first end of the primary-side winding (10) and the first end of the second auxiliary winding (44) are mutual dotted terminals, and the second end of the first auxiliary winding (43) and a second end of the output inductor (50) are mutual dotted terminals.

2. The apparatus according to claim 1, wherein:
a drain of the rectifier transistor (31) is connected to a first end of the secondary-side winding of the transformer unit (1), and a drain of the free-wheeling transistor (30) is connected to each of a second end of the secondary-side winding and the second end of the output inductor (50); and
the first end of the primary-side winding (10) and the second end of the secondary-side winding are mutual dotted terminals.

3. The apparatus according to claim 2, wherein:
the filter unit (5) further comprises a filter capacitor, wherein the first end of the output inductor (50) and one end of the filter capacitor are both connected to the output end; and the other end of the filter capacitor is connected to each of the second end of the first auxiliary winding (43), the source of the free-wheeling transistor (30) and the source of the rectifier transistor (31), the anode of the second diode, and the anode of the third diode (46).

4. A synchronous rectification apparatus, comprising a transformer unit (1), a primary-side switching transistor (2), a rectifier unit (3), a driver unit (4), a filter unit (5), and a clamp unit (6), wherein:
• a first end of a primary-side winding (10) of the transformer unit (1) is connected to an input end, a second end of the primary-side winding (10) is connected to each of the primary-side switching transistor (2) and the clamp unit (6), and a secondary-side winding of the transformer unit (1) is connected to each of the rectifier unit (3) and the driver unit (4); the rectifier unit (3) is connected to each of the driver unit (4) and the filter unit (5); a first end of an output inductor (50) in the filter unit (5) is connected to an output end; mutual inductance occurs between the output inductor (50) and a first auxiliary winding (43) in the driver unit (4); and a source of the primary-side switching transistor (2) is grounded;
• the transformer unit (1) is configured to generate an alternating current and a first control signal at the secondary-side winding;
• the filter unit (5) is configured to filter a pulsating direct current output by the rectifier unit (3) to form and output a direct current, and generate a second control signal; and
• the driver unit (4) is configured to drive a rectifier transistor (31) and a free-wheeling transistor (30) in the rectifier unit (3) to rectify an alternating current according to the first control signal and the second control signal,
**characterized in that**
the clamp unit (6) is configured to provide a demagnetization voltage for the primary-side winding (10) when the primary-side switching transistor (2) is turned off,
wherein the driver unit (4) comprises:
∘ an N-channel enhancement mode field effect transistor (40) and a P-channel enhancement mode field effect transistor (41), wherein a source of the N-channel enhancement mode field effect transistor (40) is connected to each of a source of the P-channel enhancement mode field effect transistor (41) and a gate of the free-wheeling transistor (31), wherein a gate of the N-channel enhancement mode field effect transistor (40) and a gate of the P-channel enhancement mode field effect transistor (41) are connected to each of a first end of the secondary-side winding (11) and a drain of the rectifier transistor (31);
∘ a first diode (42), wherein a cathode of the first diode (42) is connected to a drain of the N-channel enhancement mode field effect transistor (40), an anode of the first diode (42) is connected to a first end of the first auxiliary winding (43), a second end of the first auxiliary winding (43) is connected to each of a drain of the P-channel enhancement mode field effect transistor (41), a source of the rectifier transistor (31), and a source of the free-wheeling transistor (30); and
∘ the first end of the primary-side winding (10) and a second end of the secondary-side winding (11) are mutual dotted terminals, and the second end of the first auxiliary winding (43) and a second end of the output inductor (50) are mutual dotted terminals.

5. The apparatus according to claim 4, wherein:
a gate of the rectifier transistor (31) and a drain of the free-wheeling transistor (30) are connected to each of the second end of the secondary-side winding (11) and the second end of the first auxiliary winding (43).

6. The apparatus according to claim 5, wherein:
the filter unit (5) further comprises a filter capacitor (51), wherein the first end of the output inductor (50) and one end of the filter capacitor (51) are both connected to the output end; and the other end of the filter capacitor (51) is connected to each of the second end of the first auxiliary winding (43), the source of the free-wheeling transistor (31), and the source of the rectifier transistor (31).

7. The apparatus according to any one of claims 1 to 6, wherein the clamp unit (6) comprises:
a clamp diode (60) and a clamp capacitor (61), wherein one end of the clamp capacitor (61) is connected to each of the second end of the primary-side winding (10) and the primary-side switching transistor (2), and the other end of the clamp capacitor (61) is connected to a drain of the clamp diode (60); and a source of the clamp diode (60) is grounded.

8. A synchronous rectification power supply, wherein
the power supply comprises the synchronous rectification apparatus specified in any one of claims 1 to 7.

## Patentansprüche

1. Synchrongleichrichtungsvorrichtung, die eine Transformatoreinheit (1), einen Schalttransistor (2) auf einer primären Seite, eine Gleichrichtereinheit (3), eine Ansteuerungseinheit (4), eine Filtereinheit (5) und eine Klemmeinheit (6) umfasst, wobei:
• ein erstes Ende einer Wicklung (10) der Transformatoreinheit (1) auf der primären Seite mit einem Eingangsende verbunden ist, ein zweites Ende der Wicklung (10) auf der primären Seite mit jeweils dem Schalttransistor (2) auf der primären Seite und der Klemmeinheit (6) verbunden ist und eine Wicklung der Transformatoreinheit (1) auf einer sekundären Seite mit jeweils der Gleichrichtereinheit (3) und der Ansteuerungseinheit (4) verbunden ist; die Gleichrichtereinheit (3) jeweils mit der Ansteuerungseinheit (4) und der Filtereinheit (5) verbunden ist; ein erstes Ende eines Ausgangsinduktors (50) in der Filtereinheit (5) mit einem Ausgangsende verbunden ist; eine Gegeninduktivität zwischen dem Ausgangsinduktor (50) und einer ersten Hilfswicklung (43) in der Ansteuerungseinheit (4) auftritt; und eine "Source" des Schalttransistors (2) auf der primären Seite geerdet ist;
• die Transformatoreinheit (1) ausgelegt ist, einen Wechselstrom und ein erstes Steuersignal an der Wicklung der sekundären Seite zu erzeugen;
• die Filtereinheit (5) ausgelegt ist, einen von der Gleichrichtereinheit (3) ausgegebenen pulsierenden Gleichstrom zu filtern, um einen Gleichstrom zu bilden und auszugeben und ein zweites Steuersignal zu erzeugen; und
• die Ansteuerungseinheit (4) ausgelegt ist, einen Gleichrichtertransistor (31) und einen Freilauftransistor (30) in der Gleichrichtereinheit (3) anzusteuern, um einen Wechselstrom in Übereinstimmung mit dem ersten Steuersignal und dem zweiten Steuersignal gleichzurichten,
**dadurch gekennzeichnet, dass**
die Klemmeinheit (6) ausgelegt ist, der Wicklung auf der primären Seite (10) eine Entmagnetisierungsspannung zu liefern, wenn der Schalttransistor (2) auf der primären Seite ausgeschaltet ist,
wobei die Ansteuerungseinheit (4) umfasst:
∘ einen N-Kanal-Feldeffekttransistor vom Anreicherungstyp (40) und einen P-Kanal-Feldeffekttransistor vom Anreicherungstyp (41), wobei eine "Source" des N-Kanal-Feldeffekttransistors vom Anreicherungstyp (40) jeweils mit einer "Source" des P-Kanal-Feldeffekttransistors vom Anreicherungstyp (41) und einem "Gate" des Freilauftransistors (30) verbunden ist;
∘ eine erste Diode (42), wobei eine Kathode der ersten Diode (42) mit einem "Drain" des N-Kanal-Feldeffekttransistors vom Anreicherungstyp (40) verbunden ist, eine Anode der ersten Diode (42) mit einem ersten Ende der ersten Hilfswicklung (43) verbunden ist, ein zweites Ende der ersten Hilfswicklung (43) mit jeweils einem "Drain" des P-Kanal-Feldeffekttransistors vom Anreicherungstyp (41), einer "Source" des Gleichrichtertransistors (31) und einer "Source" des Freilauftransistors (30) verbunden ist;
∘ eine zweite Hilfswicklung (44), wobei ein erstes Ende der zweiten Hilfswicklung (44) mit einem "Gate" des Gleichrichtertransistors (31) verbunden ist, ein zweites Ende der zweiten Hilfswicklung (44) mit jeweils einem "Gate" des N-Kanal-Feldeffekttransistors vom Anreicherungstyp (40) und einem "Gate" des P-Kanal-Feldeffekttransistors vom Anreicherungstyp (41) verbunden ist und eine Gegeninduktivität zwischen der zweiten Hilfswicklung (44) und der Wicklung auf der primären Seite (10) der Transformatoreinheit (1) auftritt;
∘ eine zweite Diode (45) und eine dritte Diode (46), wobei eine Kathode der zweiten Diode (45) und eine Kathode der dritten Diode (46) jeweils mit dem ersten Ende und dem zweiten Ende der zweiten Hilfswicklung (44) verbunden sind und eine Anode der zweiten Diode (45) und eine Anode der dritten Diode (46) mit jeweils der "Source" des Gleichrichtertransistors (31) und der "Source" des Freilauftransistors (30) verbunden sind; und
∘ wobei das erste Ende der Wicklung (10) auf der primären Seite und das erste Ende der zweiten Hilfswicklung (44) jeweils mit einem Punkt markierte Anschlüsse sind und das zweite Ende der ersten Hilfswicklung (43) und ein zweites Ende des Ausgangsinduktors (50) jeweils mit einem Punkt markierte Anschlüsse sind.

2. Vorrichtung nach Anspruch 1, wobei:
ein "Drain" des Gleichrichtertransistors (31) mit einem ersten Ende der Wicklung der Transformatoreinheit (1) auf der sekundären Seite verbunden ist und ein "Drain" des Freilauftransistors (30) mit jeweils einem zweiten Ende der Wicklung auf der sekundären Seite und dem zweiten Ende des Ausgangsinduktors (50) verbunden ist; und
das erste Ende der Wicklung (10) auf der primären Seite und das zweite Ende der Wicklung auf der sekundären Seite jeweils mit einem Punkt markierte Anschlüsse sind.

3. Vorrichtung nach Anspruch 2, wobei:
die Filtereinheit (5) ferner einen Filterkondensator umfasst, wobei das erste Ende des Ausgangsinduktors (50) und ein Ende des Filterkondensators beide mit dem Ausgangsende verbunden sind; und das andere Ende des Filterkondensators mit jeweils dem zweiten Ende der ersten Hilfswicklung (43), der "Source" des Freilauftransistors (30) und der "Source" des Gleichrichtertransistors (31), der Anode der zweiten Diode und der Anode der dritten Diode (46) verbunden ist.

4. Synchrongleichrichtungsvorrichtung, die eine Transformatoreinheit (1), einen Schalttransistor (2) auf einer primären Seite, eine Gleichrichtereinheit (3), eine Ansteuerungseinheit (4), eine Filtereinheit (5) und eine Klemmeinheit (6) umfasst, wobei:
• ein erstes Ende einer Wicklung (10) der Transformatoreinheit (1) auf der primären Seite mit einem Eingangsende verbunden ist, ein zweites Ende der Wicklung (10) auf der primären Seite mit jeweils dem Schalttransistor (2) auf der primären Seite und der Klemmeinheit (6) verbunden ist und eine Wicklung der Transformatoreinheit (1) auf einer sekundären Seite mit jeweils der Gleichrichtereinheit (3) und der Ansteuerungseinheit (4) verbunden ist; die Gleichrichtereinheit (3) jeweils mit der Ansteuerungseinheit (4) und der Filtereinheit (5) verbunden ist; ein erstes Ende eines Ausgangsinduktors (50) in der Filtereinheit (5) mit einem Ausgangsende verbunden ist; eine Gegeninduktivität zwischen dem Ausgangsinduktor (50) und einer ersten Hilfswicklung (43) in der Ansteuerungseinheit (4) auftritt; und eine "Source" des Schalttransistors (2) auf der primären Seite geerdet ist;
• die Transformatoreinheit (1) ausgelegt ist, einen Wechselstrom und ein erstes Steuersignal an der Wicklung der sekundären Seite zu erzeugen;
• die Filtereinheit (5) ausgelegt ist, einen von der Gleichrichtereinheit (3) ausgegebenen pulsierenden Gleichstrom zu filtern, um einen Gleichstrom zu bilden und auszugeben und ein zweites Steuersignal zu erzeugen; und
• die Ansteuerungseinheit (4) ausgelegt ist, einen Gleichrichtertransistor (31) und einen Freilauftransistor (30) in der Gleichrichtereinheit (3) anzusteuern, um einen Wechselstrom in Übereinstimmung mit dem ersten Steuersignal und dem zweiten Steuersignal gleichzurichten,
**dadurch gekennzeichnet, dass**
die Klemmeinheit (6) ausgelegt ist, der Wicklung auf der primären Seite (10) eine Entmagnetisierungsspannung zu liefern, wenn der Schalttransistor (2) auf der primären Seite ausgeschaltet ist,
wobei die Ansteuerungseinheit (4) umfasst:
∘ einen N-Kanal-Feldeffekttransistor vom Anreicherungstyp (40) und einen P-Kanal-Feldeffekttransistor vom Anreicherungstyp (41), wobei eine "Source" des N-Kanal-Feldeffekttransistors vom Anreicherungstyp (40) jeweils mit einer "Source" des P-Kanal-Feldeffekttransistors vom Anreicherungstyp (41) und einem "Gate" des Freilauftransistors (31) verbunden ist, wobei ein "Gate" des N-Kanal-Feldeffekttransistors vom Anreicherungstyp (40) und ein "Gate" des P-Kanal-Feldeffekttransistors vom Anreicherungstyp (41) mit jeweils einem ersten Ende der Wicklung (11) auf der sekundären Seite und einem "Drain" des Gleichrichtertransistors (31) verbunden sind;
∘ eine erste Diode (42), wobei eine Kathode der ersten Diode (42) mit einem "Drain" des N-Kanal-Feldeffekttransistors vom Anreicherungstyp (40) verbunden ist, eine Anode der ersten Diode (42) mit einem ersten Ende der ersten Hilfswicklung (43) verbunden ist, ein zweites Ende der ersten Hilfswicklung (43) mit jeweils einem "Drain" des P-Kanal-Feldeffekttransistors vom Anreicherungstyp (41), einer "Source" des Gleichrichtertransistors (31) und einer "Source" des Freilauftransistors (30) verbunden ist; und
∘ das erste Ende der Wicklung (10) auf der primären Seite und das zweite Ende der Wicklung auf der sekundären Seite jeweils mit einem Punkt markierte Anschlüsse sind und das zweite Ende der ersten Hilfswicklung (43) und ein zweites Ende des Ausgangsinduktors (50) jeweils mit einem Punkt markierte Anschlüsse sind.

5. Vorrichtung nach Anspruch 4, wobei:
ein "Gate" des Gleichrichtertransistors (31) und ein "Drain" des Freilauftransistors (30) mit jeweils dem zweiten Ende der Wicklung (11) auf der sekundären Seite und dem zweiten Ende der ersten Hilfswicklung (43) verbunden sind.

6. Vorrichtung nach Anspruch 5, wobei:
die Filtereinheit (5) ferner einen Filterkondensator (51) umfasst, wobei das erste Ende des Ausgangsinduktors (50) und ein Ende des Filterkondensators (51) beide mit dem Ausgangsende verbunden sind; und das andere Ende des Filterkondensators (51) mit jeweils dem zweiten Ende der ersten Hilfswicklung (43), der "Source" des Freilauftransistors (31) und der "Source" des Gleichrichtertransistors (31) verbunden ist.

7. Vorrichtung nach einem der Ansprüche 1 bis 6, wobei die Klemmeinheit (6) umfasst:
eine Klemmdiode (60) und einen Klemmkondensator (61), wobei ein Ende des Klemmkondensators (61) mit jeweils dem zweiten Ende der Wicklung (10) auf der primären Seite und dem Schalttransistor (2) auf der primären Seite verbunden ist und das andere Ende des Klemmkondensators (61) mit einem "Drain" der Klemmdiode (60) verbunden ist; und eine "Source" der Klemmdiode (60) geerdet ist.

8. Energieversorgung mit Synchrongleichrichtung, wobei
die Energieversorgung die Synchrongleichrichtungsvorrichtung nach einem der Ansprüche 1 bis 7 umfasst.

## Revendications

1. Appareil de redressement synchrone, comportant une unité (1) de transformation, un transistor (2) de commutation du côté primaire, une unité (3) de redressement, une unité (4) d'excitation, une unité (5) de filtrage, et une unité (6) de calage :
• une première extrémité d'un enroulement (10) côté primaire de l'unité (1) de transformation étant reliée à une extrémité d'entrée, une deuxième extrémité de l'enroulement (10) côté primaire étant reliée à chaque point parmi le transistor (2) de commutation du côté primaire et l'unité (6) de calage, et un enroulement côté secondaire de l'unité (1) de transformation étant relié à chaque unité parmi l'unité (3) de redressement et l'unité (4) d'excitation ; l'unité (3) de redressement étant reliée à chaque unité parmi l'unité (4) d'excitation et l'unité (5) de filtrage ; une première extrémité d'une inductance (50) de sortie dans l'unité (5) de filtrage étant reliée à une extrémité de sortie ; une inductance mutuelle apparaissant entre l'inductance (50) de sortie et un premier enroulement auxiliaire (43) dans l'unité (4) d'excitation ; et une source du transistor (2) de commutation du côté primaire étant mise à la terre ;
• l'unité (1) de transformation étant configurée pour générer un courant alternatif et un premier signal de commande au niveau de l'enroulement côté secondaire ;
• l'unité (5) de filtrage étant configurée pour filtrer un courant continu pulsé délivré par l'unité (3) de redressement afin de former et de délivrer un courant continu, et générer un deuxième signal de commande ; et
• l'unité (4) d'excitation étant configurée pour exciter un transistor (31) de redressement et un transistor (30) de roue libre dans l'unité (3) de redressement afin de redresser un courant alternatif d'après le premier signal de commande et le deuxième signal de commande,
**caractérisé en ce que**
l'unité (6) de calage est configurée pour fournir une tension de désaimantation à l'enroulement (10) côté primaire lorsque le transistor (2) de commutation du côté primaire est éteint, l'unité (4) d'excitation comportant :
• un transistor (40) à effet de champ à canal N avec mode d'enrichissement et un transistor (41) à effet de champ à canal P avec mode d'enrichissement, une source du transistor (40) à effet de champ à canal N avec mode d'enrichissement étant reliée à chaque point parmi une source du transistor (41) à effet de champ à canal P avec mode d'enrichissement et une grille du transistor (30) de roue libre ;
• une première diode (42), une cathode de la première diode (42) étant reliée à un drain du transistor (40) à effet de champ à canal N avec mode d'enrichissement, une anode de la première diode (42) étant reliée à une première extrémité du premier enroulement auxiliaire (43), une deuxième extrémité du premier enroulement auxiliaire (43) étant reliée à chaque point parmi un drain du transistor (41) à effet de champ à canal P avec mode d'enrichissement, une source du transistor (31) de redressement, et une source du transistor (30) de roue libre ;
• un deuxième enroulement auxiliaire (44), une première extrémité du deuxième enroulement auxiliaire (44) étant reliée à une grille du transistor (31) de redressement, une deuxième extrémité du deuxième enroulement auxiliaire (44) étant reliée à chaque point parmi une grille du transistor (40) à effet de champ à canal N avec mode d'enrichissement et une grille du transistor (41) à effet de champ à canal P avec mode d'enrichissement, et une inductance mutuelle apparaissant entre le deuxième enroulement auxiliaire (44) et l'enroulement (10) côté primaire de l'unité (1) de transformation ;
• une deuxième diode (45) et une troisième diode (46), une cathode de la deuxième diode (45) et une cathode de la troisième diode (46) étant respectivement reliées à la première extrémité et à la deuxième extrémité du deuxième enroulement auxiliaire (44), et une anode de la deuxième diode (45) et une anode de la troisième diode (46) étant reliées à chaque point parmi la source du transistor (31) de redressement et la source du transistor (30) de roue libre ; et
• la première extrémité de l'enroulement (10) côté primaire et la première extrémité du deuxième enroulement auxiliaire (44) étant des bornes repérées comme homologues, et la deuxième extrémité du premier enroulement auxiliaire (43) et une deuxième extrémité de l'inductance (50) de sortie étant des bornes repérées comme homologues.

2. Appareil selon la revendication 1 :
un drain du transistor (31) de redressement étant relié à une première extrémité de l'enroulement côté secondaire de l'unité (1) de transformation, et un drain du transistor (30) de roue libre étant relié à chaque extrémité parmi une deuxième extrémité de l'enroulement côté secondaire et la deuxième extrémité de l'inductance (50) de sortie ; et
la première extrémité de l'enroulement (10) côté primaire et la deuxième extrémité de l'enroulement côté secondaire étant des bornes repérées comme homologues.

3. Appareil selon la revendication 2 :
l'unité (5) de filtrage comportant en outre un condensateur de filtrage, la première extrémité de l'inductance (50) de sortie et une extrémité du condensateur de filtrage étant toutes deux reliées à l'extrémité de sortie ; et l'autre extrémité du condensateur de filtrage étant reliée à chaque point parmi la deuxième extrémité du premier enroulement auxiliaire (43), la source du transistor (30) de roue libre et la source du transistor (31) de redressement, l'anode de la deuxième diode, et l'anode de la troisième diode (46).

4. Appareil de redressement synchrone, comportant une unité (1) de transformation, un transistor (2) de commutation du côté primaire, une unité (3) de redressement, une unité (4) d'excitation, une unité (5) de filtrage, et une unité (6) de calage :
• une première extrémité d'un enroulement (10) côté primaire de l'unité (1) de transformation étant reliée à une extrémité d'entrée, une deuxième extrémité de l'enroulement (10) côté primaire étant reliée à chaque point parmi le transistor (2) de commutation du côté primaire et l'unité (6) de calage, et un enroulement côté secondaire de l'unité (1) de transformation étant relié à chaque unité parmi l'unité (3) de redressement et l'unité (4) d'excitation ; l'unité (3) de redressement étant reliée à chaque unité parmi l'unité (4) d'excitation et l'unité (5) de filtrage ; une première extrémité d'une inductance (50) de sortie dans l'unité (5) de filtrage étant reliée à une extrémité de sortie ; une inductance mutuelle apparaissant entre l'inductance (50) de sortie et un premier enroulement auxiliaire (43) dans l'unité (4) d'excitation ; et une source du transistor (2) de commutation du côté primaire étant mise à la terre ;
• l'unité (1) de transformation étant configurée pour générer un courant alternatif et un premier signal de commande au niveau de l'enroulement côté secondaire ;
• l'unité (5) de filtrage étant configurée pour filtrer un courant continu pulsé délivré par l'unité (3) de redressement afin de former et de délivrer un courant continu, et générer un deuxième signal de commande ; et
• l'unité (4) d'excitation étant configurée pour exciter un transistor (31) de redressement et un transistor (30) de roue libre dans l'unité (3) de redressement afin de redresser un courant alternatif d'après le premier signal de commande et le deuxième signal de commande,
**caractérisé en ce que**
l'unité (6) de calage est configurée pour fournir une tension de désaimantation à l'enroulement (10) côté primaire lorsque le transistor (2) de commutation du côté primaire est éteint,
l'unité (4) d'excitation comportant :
• un transistor (40) à effet de champ à canal N avec mode d'enrichissement et un transistor (41) à effet de champ à canal P avec mode d'enrichissement, une source du transistor (40) à effet de champ à canal N avec mode d'enrichissement étant reliée à chaque point parmi une source du transistor (41) à effet de champ à canal P avec mode d'enrichissement et une grille du transistor de roue libre (31), une grille du transistor (40) à effet de champ à canal N avec mode d'enrichissement et une grille du transistor (41) à effet de champ à canal P avec mode d'enrichissement étant reliées à chaque point parmi une première extrémité de l'enroulement côté secondaire (11) et un drain du transistor (31) de redressement ;
• une première diode (42), une cathode de la première diode (42) étant reliée à un drain du transistor (40) à effet de champ à canal N avec mode d'enrichissement, une anode de la première diode (42) étant reliée à une première extrémité du premier enroulement auxiliaire (43), une deuxième extrémité du premier enroulement auxiliaire (43) étant reliée à chaque point parmi un drain du transistor (41) à effet de champ à canal P avec mode d'enrichissement, une source du transistor (31) de redressement, et une source du transistor (30) de roue libre ; et
• la première extrémité de l'enroulement (10) côté primaire et une deuxième extrémité de l'enroulement côté secondaire (11) étant des bornes repérées comme homologues, et la deuxième extrémité du premier enroulement auxiliaire (43) et une deuxième extrémité de l'inductance (50) de sortie étant des bornes repérées comme homologues.

5. Appareil selon la revendication 4 :
une grille du transistor (31) de redressement et un drain du transistor (30) de roue libre étant reliés à chaque extrémité parmi la deuxième extrémité de l'enroulement côté secondaire (11) et la deuxième extrémité du premier enroulement auxiliaire (43).

6. Appareil selon la revendication 5 :
l'unité (5) de filtrage comportant en outre un condensateur (51) de filtrage, la première extrémité de l'inductance (50) de sortie et une extrémité du condensateur (51) de filtrage étant toutes deux reliées à l'extrémité de sortie ; et l'autre extrémité du condensateur (51) de filtrage étant reliée à chaque point parmi la deuxième extrémité du premier enroulement auxiliaire (43), la source du transistor de roue libre (31), et la source du transistor (31) de redressement.

7. Appareil selon l'une quelconque des revendications 1 à 6, l'unité (6) de calage comportant :
une diode (60) de calage et un condensateur (61) de calage, une extrémité du condensateur (61) de calage étant reliée à chaque point parmi la deuxième extrémité de l'enroulement (10) côté primaire et le transistor (2) de commutation du côté primaire, et l'autre extrémité du condensateur (61) de calage étant reliée à un drain de la diode (60) de calage ; et une source de la diode (60) de calage étant mise à la terre.

8. Alimentation à redressement synchrone,
l'alimentation comportant l'appareil de redressement synchrone spécifié dans l'une quelconque des revendications 1 à 7.
